# EUROPEAN PATENT SPECIFICATION

(11) **EP 1 159 819 B1**
(45) Date of publication and mention of the grant of the patent: **23.08.2006**
(21) Application number: 00906352.0
(22) Date of filing: 18.02.2000
(51) Int. Cl.: H04L 29/12, H04L 12/56

(54) **ENCODING USER SUBSCRIPTION IN IP ADDRESS**
BENUTZERSABONNEMENTSKODIERUNG IN DER IP ADRESSE
CODAGE D'ABONNEMENTS D'UTILISATEURS DANS UNE ADRESSE IP

(30) Priority: 10.03.1999 NL 1011524
(43) Date of publication of application: 05.12.2001
(73) Proprietor: Koninklijke KPN N.V., 9726 AE Groningen (NL)
(72) Inventor: BLOM, Marcus, Anthonius, NL-2273 VS Voorburg (NL)
(74) Representative: Wuyts, Koenraad Maria
(86) International application number: PCT/EP2000/001348
(87) International publication number: WO 2000/054477

(56) References cited:
- HUI S -C ET AL: "A dynamic IP addressing system for Internet telephony applications" COMPUTER COMMUNICATIONS,NL,ELSEVIER SCIENCE PUBLISHERS BV, AMSTERDAM, vol. 21, no. 3, page 254-266 XP004115293 ISSN: 0140-3664
- LEIZAOLA M S: "TUNING IP PERFORMANCE THE RIGHT TOOLS FOR THE TASK" DATA COMMUNICATIONS,US,MCGRAW HILL. NEW YORK, vol. 27, no. 7, page 129-130,132,134 XP000751339 ISSN: 0363-6399
- CISCO SYSTEMS, INC: "Cisco system's tag switching architecture overview" REQUEST FOR COMMENTS - RFC2105, [Online] 1997, pages 1-11, XP002124989 Retrieved from the Internet: <URL:http://www.cis.ohio-state.edu/htbin/r fc/rfc2105.html> [retrieved on 1999-12-08]

## Description

### A. Background of the invention

The invention is related to a method for the transmission, via an IP access point and various IP routers, of IP packets, originating from users with different service contracts.

Different users of the Internet are using the Internet for different purposes and have different requirements with regard to quality of service. It is known in the prior art, for instance from reference 2, that IP routers can classify IP Packets based on information in the header of a IP Packet, with the purpose of differentiating services for each customer. Also reference 3 discloses a need to prioritize traffic, e.g. based on IP source or destination. Both reference 1 and 2 fail to disclose an efficient way to provide the relevant IP Routers with information with regard to the service requirements of the user.

It is also known in the prior art, for instance from reference 1, that IP packets can be handled by IP routers differentially on the basis of the so-called IP precedence bits in the header of a packet, and that the IP precedence bits can be set by an IP router at the edge of the network ("IP edge router") on the basis of various attributes of the TP packet ("classification"). It is also known that, on the basis of the precedence bits, the IP traffic of users will, different service subscriptions can be differentially handled ("per hop behaviour"), i.e. according to the subscription-related contract agreements. Said classification and "per hop behaviour" are the building blocks with which, in an IP network, future-determined quality guarantees can be given which are required for demanding applications, such as IP telephony, IP videophony or gaming.

The prior art has the following disdvantages : Because the IP Router has to look up the service requirements for each user (1) classification requires much processor capacity of the IP edge router, whereby, with the current technology, it is deployable for far too few users simultaneously and therefore unsuitable for large-scale use, and (2) continuous adjustment of the configuration of all IP edge routers in the network is necessary, viz. upon every login or logout of a user.

### B. Summary of the invention

The invention seeks to obviate the said disadvantages. To this end the invention provides a method for setting the value of the precedence bit of an IP Packet by assigning a specific IP address to a user when the user logs in into the IP network, based on the type of subscription the user has; and subsequently determining the value of the precedence bit of each IP Packet sent by the user based on information derived from said specific IP address. In a preferred embodiment the specific IP address comprises a code representing the type of subscription of the user and advantageously this code is located in a predetermined position within the IP address.
The information with regard to the type of subscription the user has can be retrieved from the database of the Internet Service Provider.

### C. Description of the diagram

The mode of operation of the invention is further explained on the basis of two figures.

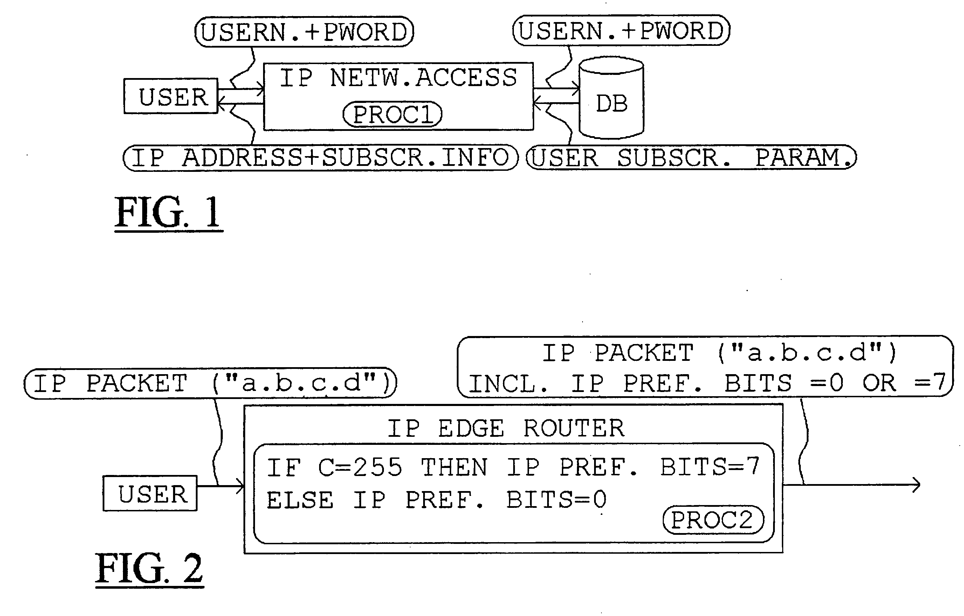

Fig. 1 shows how an IP address is assigned to a user. In this example, two subscriptions are distinguished: ordinary and special. Users with a special subscription receive an IP address with the format "xxxxxxxx.xxxxxxxx.11111111.xxxxxxxx", i.e. the bit pattern "11111111" in positions 17-24 counted from the left, where "x" can be a 0 or a 1. Users with an ordinary subscription receive an IP address with another bit pattern in positions 17-24. In the customary notation for the Internet, this is an address "a.b.255.d", where 0<-a,b,d<=255, as IP address for users with a special subscription, and "a.b.c.d", where 0<=a,b,d<=255 and c<255, as IP address for ordinary users. Fig. 2 shows how an IP address of this example is used by the IP edge router to set the IP precedence bits, in this example to the value of 0 for ordinary users and 7 for special users.

### D. References

1. "Cisco IOS Enabling Network Services: QoS Services";
   www.cisco.com/warp/public/732/net_enabled/queuing.h Lml
2. Kumar, V.P., Lakshman T.v., Stiliadis D.:"Beyond Best Effort: Router Architectures for the Differentiated Services of Tomorrow's Internet", May 1998, Bell Laboratories, Lucent Technologies, TREE Communications.
3. Leizaola M.S.: "Tuning IP Performance The Right Tools for the Task", Data Communications, US, MCGraw Hill, New York, vol. 27, no. 7, page 129-130, 123, 134 XP000751339, ISSN: 0360-6399.

## Claims

1. A method for setting the value of the precedence bit of an IP Packet **characterized by** the steps:
a. assigning a specific IP address to a user when said user logs in into the IP network, based on the type of subscription the user has;
b. determine the value of said precedence bit of each IP Packet sent by said user based on information derived from said specific IP address.

2. Method according to claim 1 **characterized in that** said specific IP address comprises a code representing the type of subscription of said user.

3. Method according to claim 2 **characterized in that** said code is represented by a predetermined bit pattern.

4. Method according to claim 3 **characterized in that** said bit pattern is located in a predetermined position within the IP address.

5. Method, according to claim 1-3 **characterized in that** information with regard to the type of subscription the user has is retrieved from A database.

## Patentansprüche

1. Verfahren zum Setzen des Wertes des Prioritätsbits eines IP-Paketes, **gekennzeichnet durch** die Schritte:
a. Zuweisung einer spezifischen IP-Adresse an einen Benutzer, wenn der besagte Benutzer sich an einem IP-Netzwerk anmeldet, basierend auf dem Typ des Abonnements, welches der Benutzer hat; und
b. Bestimmung des Wertes des besagten Prioritätsbits von jedem IP-Paket, welches von diesem besagten Benutzer gesendet wird, basierend auf der Information, die von der spezifischen IP-Adresse abgeleitet werden kann.

2. Verfahren nach Anspruch 1, **dadurch gekennzeichnet, dass** die besagte spezifische IP-Adresse einen Code umfasst, der den Typ des Abonnements des bestimmten Users darstellt.

3. Verfahren nach Anspruch 2, **dadurch gekennzeichnet, dass** der besagte Code durch ein vorbestimmtes Bit-Muster dargestellt wird.

4. Verfahren nach Anspruch 3, **dadurch gekennzeichnet, dass** das besagte Bit-Muster an einer vorbestimmten Stelle innerhalb der IP-Adresse angeordnet ist.

5. Verfahren nach einem der Ansprüche 1 bis 3, **dadurch gekennzeichnet, dass** die Information in Bezug auf die Art des Abonnements, welches der User hat, aus einer Datenbank abgefragt wird.

## Revendications

1. Procédé pour établir la valeur du bit de précédence d'un datagramme IP, **caractérisé par** les étapes suivantes:
a. attribuer une adresse IP spécifique à un utilisateur lorsque ledit utilisateur ouvre une session dans le réseau IP sur la base du type d'abonnement dont l'utilisateur dispose;
b. déterminer la valeur dudit bit de précédence de chaque datagramme IP envoyé par ledit utilisateur sur la base d'informations dérivées à partir de ladite adresse IP spécifique.

2. Procédé selon la revendication 1, **caractérisé en ce que** ladite adresse IP spécifique comprend un code représentant le type d'abonnement dudit utilisateur.

3. Procédé selon la revendication 2, **caractérisé en ce que** ledit code est représenté par un profil binaire prédéterminé.

4. Procédé selon la revendication 3, **caractérisé en ce que** ledit profil binaire est situé dans un position prédéterminée à l'intérieur de l'adresse IP.

5. Procédé selon l'une quelconque des revendications 1 à 3, **caractérisé en ce que** les informations relatives au type d'abonnement de l'utilisateur sont récupérées dans une base de données.
